Europäisches Patentamt

(19) European Patent Office

Office européen des brevets

(11) Numéro de publication: **0 005 109**
A2

(12) **DEMANDE DE BREVET EUROPEEN**

(21) Numéro de dépôt: **79400241.0**

(22) Date de dépôt: **12.04.79**

(51) Int. Cl.²: **H 02 J 11/00**
**G 05 F 1/44**

(30) Priorité: **26.04.78 CA 302066**

(43) Date de publication de la demande:
**31.10.79 Bulletin 79 22**

(84) Etats Contractants Désignés:
**DE FR GB IT SE**

(71) Demandeur: **Société dite : HYDRO-QUEBEC**
**75 Ouest, Boulevard Dorchester**
**Montreal Québec(CA)**

(72) Inventeur: **Berthiaume, Raymond**
**127, rue de Poitiers Ste Julie**
**Varennes Province du Québec JOL 2CO(CA)**

(74) Mandataire: **Rodhain, Claude**
**30, rue La Boétie**
**F-75008 Paris(FR)**

(54) **Installation et procédé d'alimentation de balises à lampes-éclairs.**

(57) - La presente invention concerne l'alimentation de balises à lampes-éclairs par l'énergie capacitive extraite d'une section isolée du fil de garde d'une ligne de transport d'énergie. L'installation d'alimentation comporte un circuit de transformation de l'énergie capacitive à courant alternatif du fil de garde en tension continue qui alimente au moins une des lampes-éclairs et un circuit de régulation monté en dérivation sur le circuit de transformation pour contrôler une valeur seuil de la tension continue alimentant les lampes. Cette régulation s'effectue en détectant la valeur seuil prédéterminée de la tension continue aux bornes des lampes et en commutant à la masse l'énergie capacitive extraite du fil de garde lorsque cette valeur seuil est atteinte. En outre, une impulsion générée à intervalle prédéterminée commande un circuit de mise à feu de chaque lampe-éclair lorsque celle-ci est sous une tension continue correspondant à la valeur seuil prédéterminée et régularisée par commutation shunt.

FIG. 1

Croydon Printing Company Ltd.

EP 0 005 109 A2

La présente invention a trait à l'alimentation de lampes-éclairs de balises stroboscopiques par une source capacitive, et précisément à l'alimentation de ces lampes-éclairs à partir du fil de garde d'une ligne de transport d'énergie à haute tension alternative.

Jusqu'ici, les balises stroboscopiques utilisées pour signaler la présence des pilônes supportant les faisceaux de conducteurs des lignes de transport à très haute tension étaient alimentées soit à l'aide d'une ligne secondaire à partir d'un poste de transformation, soit à l'aide de groupes électrogènes. L'une ou l'autre de ces formes d'alimentation des balises s'avère toutefois très peu économique en termes de coût d'installation et d'entretien en plus de présenter une fiabilité minime au niveau de la constante d'alimentation.

L'objet premier de la présente invention vise à utiliser l'énergie induite par couplage capacitif dans un fil de garde par les conducteurs des lignes de transport d'énergie sous haute tension CA. Le fil de garde est ce conducteur accroché au sommet des pilônes et qui a pour fonction principale de protéger les faisceaux conducteurs contre la foudre. Ce fil de garde n'est donc habituellement pas utilisé pour le transport d'énergie en soi, mais, en isolant une section donnée de ce fil de garde, de l'énergie y est induite par couplage capacitif par les conducteurs sous-adjacents, et le fil de garde constitue alors une source capacitive d'énergie. En récupérant cette énergie induite dans le fil de garde, on évite alors les inconvénients inhérents aux sources d'alimentation traditionnelles mentionnées ci-haut, en plus d'obtenir une source d'alimentation économique et fiable immédiatement utilisable à l'endroit désiré, ce dernier avantage n'étant pas négligeable en raison de l'éloignement des lignes de transport des sous-stations de distribution locales.

Plus spécifiquement, la présente invention est relative à une installation d'alimentation des lampes-éclairs de balises stroboscopiques par le fil de garde d'une ligne de transport d'énergie à courant alternatif. L'installation comporte des moyens de transformation de l'énergie capacitive à courant alternatif en tension continue pour alimenter au moins une desdites lampes-éclairs; des moyens de régulation couplés en dérivation avec lesdits moyens de transformation pour contrôler l'alimentation en tension continue desdites lampes-éclairs; et des moyens de génération d'une impulsion à fréquence prédéterminée pour la mise à feu de ladite lampe-éclair lorsque sous ladite tension continue régularisée par lesdits moyens de régularisation.

La présente invention concerne également un procédé d'alimentation de lampes-éclairs de balises stroboscopiques mises en oeuvre par l'installation décrite plus haut.

Une forme préférée de réalisation de la présente invention sera décrite ci-après avec référence aux dessins annexés, dans lesquels:

- la figure 1  illustre schématiquement l'installation d'alimentation de lampes-éclairs à partir de l'énergie capacitive extraite d'un fil de garde, et

- la figure 2 présente un schéma détaillé de l'installation d'alimentation de la fig. 1.

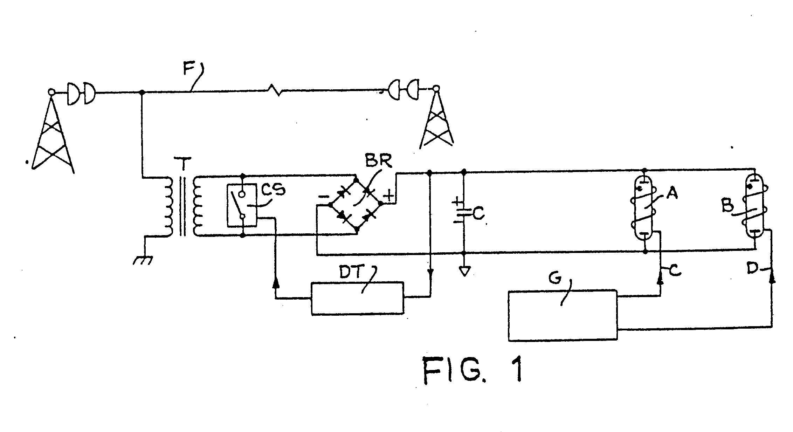

Le schéma illustré à la fig. 1 montre un transformateur abaisseur de tension T dont les enroulements primaires sont branchés d'une part à une section isolée du fil de garde F et d'autre part à la masse. Le dispositif P (voir fig. 1) branché à travers les enroulements primaires du transformateur T assure la fonction de parafoudre du fil de garde F. La tension alternative apparaissant aux bornes secondaires du transformateur T est rectifiée à travers un pont de rectification à diodes BR qui charge en tension continue un condensateur C, lequel alimente deux lampes-élcairs A et B reliées en parallèle. Un circuit détecteur DT commande la fermeture d'un commutateur CS branché à travers les bornes des enroulements secondaires du transformateur T, lorsque la tension aux bornes du condensateur C atteint une valeur de seuil prédéterminée. La fermeture du commutateur shunt CS a pour effet de court-circuiter le secondaire du transformateur T, dérivant ainsi à la masse l'énergie extraite du fil de garde F.

D'autre part, un générateur G émet à une fréquence prédéterminée un signal d'amorce des lampes-éclairs A ou B à travers le fil d'amorçage C ou D, respectivement. Le signal d'amorçage consiste en une impulsion de forte tension mais de courte durée appliquée au fil d'amorçage des lampes-éclairs, cette impulsion ayant pour effet d'ioniser le gaz, habituellement du xénon, contenu dans les lampes-

...

éclairs. Cette ionisation cause alors une diminution sensible à la résistance interne des lampes-éclairs, ce qui provoque la décharge brusque du condensateur C à travers les lampes, produisant ainsi l'éclair désiré. Le générateur G détermine non seulement la fréquence à laquelle l'impulsion d'amorce est générée, mais contrôle également la durée de cette impulsion.

Par la suite, le condensateur C étant déchargé, le circuit détecteur DT change d'état et permet l'ouverture du commutateur shunt CS, ce qui provoque à nouveau la recharge du condensateur C à travers le pont de diodes BR.

Il est à noter que le temps de charge du condensateur C est moindre que l'intervalle entre les temps de génération des impulsions d'amorce par le générateur G.

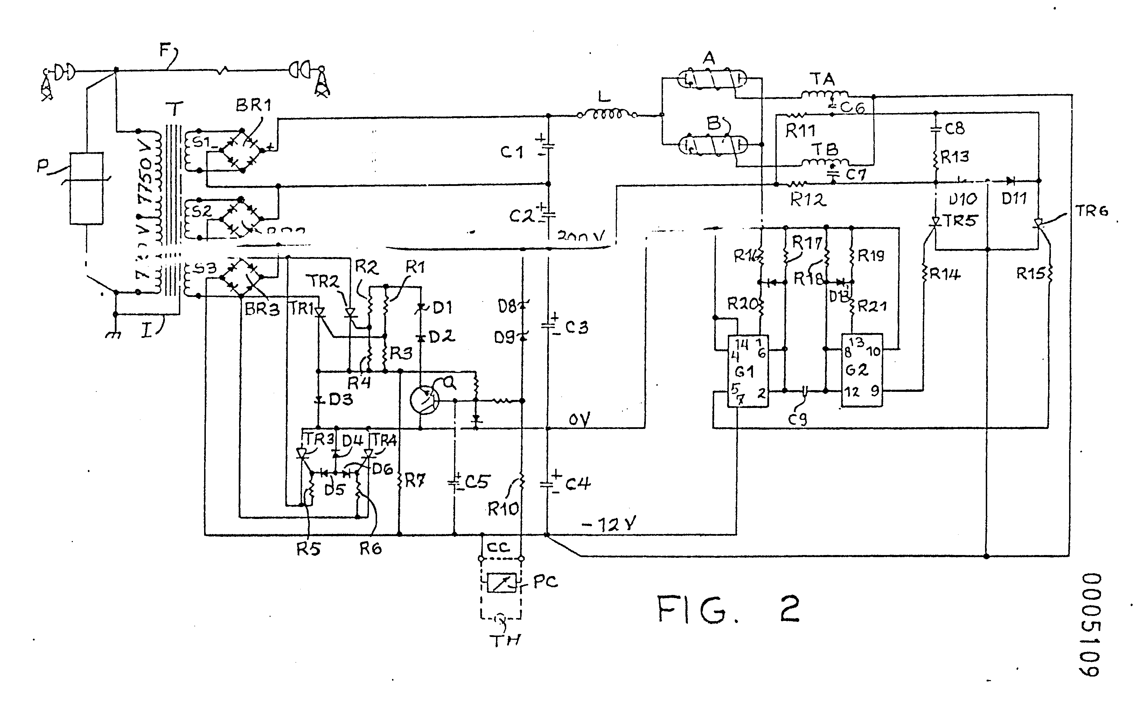

La figure 2 présente un mode de réalisation détaillé du système d'alimentation de la fig. 1. Le transformateur-abaisseur de tension T a ses enroulements primaires branchés entre la section isolée du fil de garde F et la masse et comporte trois enroulements secondaires S1, S2 et S3 protégés contre les surtensions par un écran isolant I. Chacun des enroulements secondaires est relié à un pont de rectification à diodes BR1, BR2 et BR3, respectivement qui génère la tension continue nécessaire à la charge de la batterie de condensateurs C1, C2, C3 et C4. Les condensateurs C1, C2 et C3 alimentent en tension continue les bornes des lampes-éclairs A et B alors que le condensateur C4 sert de source d'alimentation aux générateurs de signaux d'amorçage G1 et G2 commandant l'instant d'amorce des lampes-éclairs A et B. D'autre part, la tension aux bornes du condensateur C3 est détectée par le circuit détecteur constitué principalement du transistor Q, lequel entre en conduction lorsque le condensateur C3 est à pleine charge. La conduction de C3 entraîne la mise à feu des thyristors TR1 et TR2, qui entrent alors en conduction, court-circuitant ainsi les bornes de l'enroulement secondaire S3. La mise en court circuit de l'enroulement S3 entraîne la fourniture d'une puissance nulle aux enroulements S1 et S2, de sorte que l'énergie fournie par le fil de garde F est entièrement délivrée à la masse par l'enroulement primaire du transformateur T. La décharge subséquente du condensateur C3 à travers les lampes-éclairs

...

ramène le transistor Q dans son état de non-conduction, levant ainsi le court-circuit aux bornes des enroulements secondaires du transformateur.

Au départ, les condensateurs C1, C2, C3 et C4 sont chargés à la tension de fonctionnement requise et le transistor Q est polarisé dans son état de conduction par les résistances R9 et R10 à travers les diodes Zener de protection D8 et D9. Le transistor Q étant conducteur, un courant circule à travers les diodes D1 et D2 et les diviseurs de tension R1, R3 et R2, R4, ce qui provoque la mise à feu des thyristors TR1, TR2, respectivement. La résistance R7, le condensateur C5 et la diode D7 servent d'éléments de protection au transistor Q. Egalement, les thyristors à conduction contrôlée TR3 et TR4 dont la gâchette respective est polarisée par les résistances R5 et R6 auxquelles sont associées les diodes de blocage et de protection D4, D5 et D6, entrent en conduction. Cette mise en conduction des thyristors TR1, TR2, TR3 et TR4 a pour effet de mettre en court-circuit le pont de diodes BR3, et, par effet d'entraînement, les enroulements secondaires du transformateur T. Le secondaire du transformateur T étant en court-circuit, l'alimentation en tension continue de la batterie des condensateurs C1, C2 et C3 s'arrête, étant alors chargés à la tension désirée. Dans le présent,cas, la tension s'établissant entre l'anode et la cathode des lampes-éclairs A et B se situe à environ 900 vCC.

L'instant d'amorçage des lampes-éclairs A et B est régi par les générateurs d'impulsions de type monostable G1 et G2, respectivement. Ces générateurs sont alimentés par le condensateur C4 et polarisés par les résistances R16 ,R17, R20 et la diode D12 pour le générateur G1, et par les résistances R18, R19, R21 et la diode D13 pour le générateur G2. Un condensateur d'intégration C9 est également prévu entre les deux générateurs. Le générateur G1 émet à une fréquence prédéterminée, et à travers la résistance R6, un signal de mise à feu du thyristor TR6 qui entre alors en conduction, provoquant ainsi un court-circuit à travers le transformateur d'amorçage TA et le condensateur C6 relié en série avec la lampe-éclair A. Une forte impulsion de tension est alors générée dans le fil d'amorce C, ionisant le gaz de la lampe-éclair A, ce qui provoque la brusque décharge de la batterie de

...

0005109

condensateurs C1, C2 et C3, à travers l'inductance L1, l'anode et la cathode de la lampe-éclair A. Cette décharge se traduit par l'émission d'une forte impulsion de lumière par la lampe-éclair A. La durée de l'impulsion d'amorçage traversant le fil C est déterminée par la constante de temps du circuit formé du condensateur C6 et de l'inductance de l'enroulement TA.

De façon similaire, le générateur G2 permet le scintillement de la lampe-éclair B à fréquence prédéterminée en émettant un signal de mise à feu du thyristor TR5 à travers la résistance R14 et cause ainsi un court-circuit entre les bornes du transformateur d'amorçage TB et du condensateur C7 monté en série. Ce court-circuit provoque la décharge brusque du condensateur C7 à travers le fil d'amorce D de la lampe-éclair B dont le gaz s'ionise alors pour permettre la décharge de la batterie des condensateurs C1, C2 et C3 à travers l'inductance L1, l'anode et la cathode de la lampe B. La durée de cette impulsion dans le fil d'amorce D est déterminée par le condensateur C7 et l'inductance de TB.

Les diodes D10 et D11 jouent le rôle d'éléments de blocage et de protection des thyristors TR5 et TR6 alors que la bobine de lissage L permet d'éviter une intensité trop grande de courant à travers les lampes-éclairs A et B, ce qui contribue à la longue vie de celles-ci.

En outre, il est prévu de brancher à travers les bornes M-N une cellule photo-électrique et/ou un thermostat TH, ce qui assure la mise en fonctionnement des lampes-éclairs de jour seulement ou encore lorsque la température ambiante atteint une valeur inférieure qui pourrait endommager ces lampes-éclairs. Par ailleurs, le fonctionnement en permanence des lampes-éclairs de la balise est obtenu en court-circuitant les bornes M et N à l'aide d'un raccord CC.

Il est entendu que des modifications peuvent être apportées aux modes de réalisation préférés décrits ci-haut sans affecter l'idée inventive de l'installation d'alimentation suivant la présente invention, dont la portée n'est limitée que par les revendications qui suivent.

- 6 -

0005109

<u>R E V E N D I C A T I O N S</u>

1°/- Installation d'alimentation de balises à lampes-éclairs par l'énergie capacitive extraite d'une section isolée du fil de garde d'une ligne de transport d'énergie à courant alternatif, caractérisée en ce qu'elle comporte des moyens de transformation de ladite énergie capacitive du fil de garde pour alimenter au moins une desdites lampes-éclairs en tension continue, des moyens de régulation couplés en dérivation auxdits moyens de transformation pour contrôler l'alimentation en tension continue desdites lampes-éclairs et des moyens de génération d'une impulsion à fréquence prédéterminée pour la mise à feu de ladite au moins une lampe-éclair lorsque cette dernière est sous ladite tension continue régularisée par lesdits moyens de régulation.

2°/- Installation d'alimentation selon la revendication 1, caractérisée en ce que lesdits moyens de transformation comprennent au moins un élément capacitif relié aux bornes desdites lampes-éclairs et au moins un circuit de rectification de ladite énergie à courant alternatif en tension continue pour la charge dudit élément capacitif à une tension correspondant à la tension continue de fonctionnement de ladite lampe-éclair.

3°/- Installation d'alimentation selon la revendication 2, caractérisée en ce qu'un transformateur est intercalé entre ledit circuit de rectification et ledit fil de garde.

4°/- Installation d'alimentation selon la revendication 1, caractérisée en ce que lesdits moyens de régulation comportent un circuit de commutation pour régulariser ladite tension continue à une valeur prédéterminée et un circuit de détection agissant en fonction de ladite valeur prédéterminée de la tension continue pour commander la mise en fonctionnement dudit circuit de commutation.

5°/- Installation d'alimentation selon la revendication 1, caractérisée en ce que lesdits moyens de génération comportent un ensemble générateur alimenté par lesdits moyens de transformation et délivrant ladite impulsion à courant initiateur pour l'amorce de ladite lampe-éclair.

6°/- Installation d'alimentation selon la revendication 1,

...

0005109

caractérisée en ce que lesdits moyens de transformation comportent un transformateur ayant des enroulements primaires reliés entre ledit fil de garde et la masse et des enroulements secondaires, des circuits de rectification reliés chacun à un des enroulements secondaires et une batterie de condensateurs alimentés respectivement en tension continue par lesdits circuits de rectification.

7°/- Installation d'alimentation selon la revendication 6, caractérisée en ce que lesdits moyens de régulation comportent un circuit de détection commandant la mise en fonctionnement d'un circuit de commutation relié à un desdits enroulements secondaires lorsque la tension continue aux bornes d'un desdits condensateurs de ladite batterie atteint une valeur seuil prédéterminée.

8°/- Installation d'alimentation selon la revendication 7, caractérisée en ce que ledit circuit de détection est transistorisé et en ce que ledit ensemble de commutation est à thyristors à conduction contrôlée.

9°/- Installation d'alimentation selon la revendication 6, caractérisée en ce qu'une inductance de lissage est connectée entre une borne de ladite lampe-éclair et ladite batterie de condensateur.

10°/- Installation d'alimentation selon la revendication 6, caractérisée en ce que lesdits moyens de génération comportent un circuit monostable pour chaque lampe-éclair et qui génère une impulsion pour la mise à feu d'un thyristor à conduction contrôlée gouvernant l'instant de mise en fonctionnement d'un circuit d'amorce commandant le déclenchement de la lampe-éclair.

11°/- Installation d'alimentation selon la revendication 1 ou 6, caractérisée en ce qu'un élément photosensible détermine la mise en fonction desdits moyens de régulation.

12°/- Installation d'alimentation selon la revendication 1 ou 6, caractérisée en ce qu'un élément thermosensible commande la mise en fonction desdits moyens de régulation.

13°/- Installation d'alimentation selon la revendication 1 ou 6, caractérisée en ce qu'un parafoudre est branché entre la section isolée du fil de garde et la masse, en dérivation avec lesdits moyens de transformation.

...

0005109

14°/- Procédé d'alimentation de balises à lampes-éclairs par une source d'énergie capacitive en provenance d'une section du fil de garde d'une ligne de transport d'énergie alternative, caractérisé en ce qu'on isole de la masse ladite section du fil de garde, on transforme en tension continue l'énergie soutirée de la section isolée du fil de garde pour alimenter au moins une desdites lampes-éclairs en tension continue, on détecte la valeur de ladite tension continue alimentant chaque lampe-éclair, on dérive à la masse l'énergie provenant du fil de garde à l'aide d'un circuit de commutation shunt, lorsque ladite valeur de la tension continue atteint une valeur seuil prédéterminée, et on amorce la mise à feu de chaque lampe-éclair sous ladite tension continue à valeur seuil prédéterminée à l'aide d'un circuit générateur d'impulsion respectifs.

15°/- Procédé d'alimentation selon la revendication 14, caractérisé en ce que l'étape de transformation est réalisée en rectifiant la tension alternative de ladite énergie capacitive provenant du fil de garde et en chargeant une batterie de condensateurs en tension continue.

16°/- Procédé d'alimentation selon la revendication 15, caractérisé en ce que ladite valeur seuil de la tension continue est détectée aux bornes d'un des condensateurs de la batterie et en ce que le temps de charge desdits condensateurs est inférieur à la fréquence de génération des impulsions d'amorçage par chaque circuit générateur.

FIG. 1

FIG. 2

0005109